# EUROPEAN PATENT APPLICATION

(11) **EP 2 045 984 A1**
(43) Date of publication of application: **08.04.2009**
(21) Application number: 09150724.4
(22) Date of filing: 10.11.2004
(51) Int. Cl.: H04L 12/56

(54) **Session admission control method and apparatus**

(62) Divisional of application: 04797782.2
(71) Applicant: Telefonaktiebolaget L M Ericsson (publ), 164 83 Stockholm (SE)
(72) Inventor: Mihaly, Attila, 2131, Göd (HU); Antal, Csaba, 2340, Kiskunlachàza (HU)
(74) Representative: HOFFMANN EITLE

(57) **Abstract**

For efficient and fast admission control with respect to a new session and for exchange of data stream packets between an edge router (14) and a packet gateway (10) it is proposed to execute, at the edge router (14), selection of traffic streams of certain types from specific source nodes and target nodes and to also execute related traffic conditioning. Then, having selected specific data packet streams, the edge router (16) remarks data packets when the data packet streams are not in conformance with a predetermined traffic profile. This remarking serves as a performance indication for the packet gateway session admission control mechanism. In other words, the packet gateway (10) considers the number of remarked packets and determines on admission control for a new data packet stream session as a function of the number of remarked packets.

## Description

### FIELD OF INVENTION

The present invention relates to a session admission control method with respect to a setup of a data packet stream between a source packet gateway and a destination packet gateway, a method of operating an edge router processing data packet stream exchanged between at least one source packet gateway and at least one destination packet gateway, and related apparatuses.

### BACKGROUND ART

As Internet protocol IP technology becomes more and more widespread, the need of connecting different packet gateways, i.e. networking nodes handling many data flows in parallel through the same multiple service IP transport as intermediate devices between different network domains, e.g., a media gateway MGW, a SGSN, or a GGSN, is expressed by various operators. Here, the access network connecting the packet gateways can be basically of any kind, e.g., traditional PSTN networks, traditional PSTN networks used for dial-in access if IP services, UTRAN networks, a whole UMTS network or a corporate LAN.

In traditional IP oriented networks, there are no QoS guarantees. The need to handle different packet flows with different precedence has been addressed by the DiffServ model, S. Blake et al.: An Architecture for Differentiated Services, RFC 2475. The DiffServ architecture defines three main classes of traffic, Expedited Forwarding, Assured Forwarding, and Best Effort, to offer QoS differentiation for traffic aggregates over a router hop. Consistent treatment of the same packet stream is then prescribed over the whole DiffServ DS domain.

Further, differentiated services are extended across a DiffServ DS domain boundary by establishing a service level specification SLA between an upstream network and a downstream DS domain. The service level specification SLA may specify a packet classification and remarking rules as well as traffic profiles and actions to traffic streams, which may be in- or out-of profiles. The packet classification policy identifies the subnet of traffic that may receive a differentiated service being conditioned and/or mapped to one or more behavior aggregates through DiffServ DS code point re-marking within the DiffServ DS domain. Traffic conditioning performs metering, shaping, policing and/or re-marking to ensure that the traffic entering the DiffServ domain conforms to rules specified in the service level specification SLA.

Generally, it may be assumed that the aim for this is to offer high quality circuit switched or packet switched services, which requires a transmission service having relatively low packet loss and low packet delay.

It is further assumed that some sort of end-to-end call/session level signaling protocol is used to control the calls, e.g., H.323, SIP, DSS1, ISUP, BICC, or their appropriate combination. When a call establishment message hits the gateway, the gateway has to ensure that a high quality transmission path exists to the remote gateway, which can accommodate the new call. If the gateway is capable of ensuring the required transmission path, it accepts the call and then the call establishment proceeds. If this is not the case, the call will be rejected and the gateway returns to a negative acknowledgement.

In view of the above, different methods have been proposed for providing high quality bearer for particular session flows traveling over an IP network.

One such method is a media gateway working according to IETF Intserv framework, R. Braden et al., Resource ReSerVation Protocol (RSVP) - Version 1 Functional Specification, RFC 2205, J. Wroclawski: The Use of RSVP with IETF Integrated Services, RFC 2210, acting as follows. Upon arrival of a call/session establishment message, it uses a resource reservation message which travels through the network core. Each router along the path examines the request and reserves the necessary routing resources. If resource reservation is successful, then the related media gateway MGW will receive back an acknowledgement. Then, the call/session establishment proceeds towards the remote media gateway MGW.

However, this first method requires per-flow states to be installed in each network core router. The scalability concerns regarding these solutions are well-known. The resource reservation message travels back and forth in the network core which significantly delays the call/session establishment.

Another second method relates to a media gateway MGW applying a static admission control method being configured with static bandwidth limitations towards the transport network according to a so-called hose model or towards all destinations separately according to a so-called trunk model. The so-called trunk and hose limitations may also be applied in a combined manner. Related limitations are aligned to the provisioned transport resources, and bandwidth requirements of already admitted sessions/calls are computed by the media gateway MGW. A new call/session is then accepted if the total would-be bandwidth is below the configured limitation towards a certain direction. Otherwise, it is rejected.

Another third method is a media gateway assuming an over-dimensioned core network admitting all calls/sessions into the network without making any effort to ensure that the required high quality transmission path exists.

A first common problem of the second and third method is that the media gateways MGW do not know anything about the actual state of the transport networks, which inevitably leads to performance degradation when the call/session arrival rate exceeds the capacity of the transport network. Possible causes of this may be multiple faults or improper transport network provisioning.

Yet another problem with the second and third method is related to bandwidth efficiency and management complexity. In particular, with respect to the hose model it generally requires more transport resources than the trunk model due to the uncertainty of the traffic distribution. However, the number of parameters to be configured in the trunk model can be large in a network having many media gateways MGW. Also, as the number of simultaneous calls/sessions between two media gateway MGW pairs is relatively low, the well-known Erlang-B dimensioning formula for a certain blocking target may also result in significant over-provisioning even for the trunk model. Also, the bandwidth efficiency of the third method is low and requires management support based on continuous performance monitoring to avoid performance degradation.

Another fourth method is related to a media gateway applying an end-to-end measurement based admission control MBAC method using performance measurements to incur the availability of transport resources. Many kinds of performance measures may be used and the collection in the transport network can be provided by many methods. Basically, two important categories are distinguished.

According to a first category, the measurements are selected by using functionality in the user layer protocols, e.g., RTP. This does not require any specific functionality in the networking routers.

According to a second category, the media gateway sends probe packets into the network, e.g., upon arrival of each individual call. The networking routers in the core network maintain information about aggregated traffic load. When a networking router receives a probe packet and is congested, it will mark and drop the probe packet. The congestion information thus arrives to the remote media gateway MGW, which then rejects the new call or alternatively signals congestion back to the initiator, L. Westberg, Z.R. Turanyi: Load Control of Real-Time Traffic, Internet draft, June 1999.

A first problem with respect to the fourth method, first category, is that it detects signals of performance degradation on the transport layer. Therefore, it is not able to maintain a certain extra capacity on the transport links for redundancy purposes. I.e., single failures may cause link overload which leads to performance degradations. Further, problems of co-existence with traffic regulated by other methods arise as well.

Yet another problem with the fourth method, second category, is a potential delay of call/session establishment. The reason for this is that the probe packet travels through the core network before the call admission control decision can be made. Therefore, each networking router needs to maintain an aggregated load information, and it needs to be aware of the mechanism to act accordingly.

### SUMMARY OF INVENTION

In view of the above, the object of the present invention is to provide session admission control which is fast and easy to implement.

According to the present invention, this object is achieved by a method of admission control with respect to a request for set-up of a data packet stream between a source packet gateway and a destination packet gateway. Operatively, the method of admission control is operated at a destination packet gateway, e.g., a media gateway receiving data from a remote media gateway, or alternatively an SGSN, a GGSN networking node, etc. Here, the destination packet gateway receives a stream of data packets forwarded thereto from a edge router of the backbone network connecting the destination packet gateway to the remote source packet gateway.

According to the present invention, it is suggested that data packets in the data packet stream for which a set-up request is received have two different service differentiation fields, a first service differentiation field indicating conformity with a predetermined traffic profile for data exchange between the destination packet gateway and the source packet gateway and a second service differentiation field indicating non-conformity with the predetermined traffic profile. Operatively, it is assumed that the change from a first service differentiation field to a second service differentiation field is an indication to the destination packet gateway for evaluation of conformity with a traffic profile.

According to the present invention, it is particularly proposed to measure the number of data packets handled by the destination packet gateway which have been remarked to the second service differentiation field. Only when the number of remarked data packets, e.g., after evaluation thereof according to a functional relationship like a threshold comparison, indicates conformity with the traffic profile, will the data traffic stream admission be given at the destination packet gateway.

Further to the above, the present invention also relates to a method of operating an edge router in support of the destination packet gateway, the edge router processing a data packet stream exchange between at least one source packet gateway and at least one destination packet gateway. Again, it is assumed that data packets carry a field classification identifying at least a related data packet stream source, a data packet stream destination, and a service differentiation code.

According to the present invention, it is suggested that at the edge router, data packets streams are filtered according to data packet stream source, data packet stream destination, and service differentiation code. There is operated a remarking step for the service differentiation code of data packet for performance indication to the destination packet gateway. In other words, through remarking at the router it is possible to indicate to a connected destination packet gateway that selected data packet streams are not conforming to a pre-configured data traffic profile without any additional signaling between the edge router and the destination packet gateway.

In particular, according to the present invention, remarking is achieved from a first service differentiation code indicating conformity with a predetermined traffic profile set for data exchange between the destination packet gateway and a source packet gateway to a second service differentiation field indicating non-conformity with the predetermined traffic profile.

Therefore, the present invention allows for a very fast call set-up. Further, the operation according to the present invention is 'light-weight' before it involves extra traffic functionality only at edge router without any signaling between the edge router an the destination packet gateway being executed.

Still further, the proposed edge router functionality, e.g., traffic conditioning and service field classification, may be based on existing concepts like differentiated service standards so that no extra new specification (PHB, per hob behaviour) is required. Even more important, routers in the core network do not need to be upgraded at all with invention-related functionality to implement the inventive concept.

Still further, the present invention never leads to performance degradation, as the amount of data packet stream traffic into the transport core network is controllable without data packet losses.

According to a preferred embodiment of the present invention, it is proposed to react to performance degradation at the edge router supporting the destination packet gateway to an exchange of session packet streams with a packet switched access network. In particular, it is proposed to react to an increase in a data packet dropping rate at the edge router supporting the destination packet gateway.

Therefore, this preferred embodiment of the present invention allows for the handling of unexpected core network conditions by extending the call admission control so as to react also on a measured value of data packet dropping rate besides the remarking rate.

According to a further preferred embodiment of the present invention, it is suggested to operate the edge router and the destination client according to a specific range of source addresses or destination addresses or address ranges in general.

According to these preferred embodiments, the present invention ensures a very efficient usage of transport resources by using a data packet classification based on source-destination addresses in edge routers and a call admission control according to the present invention in destination packet gateways. This is of particular benefit where the bandwidth efficiency is expected to be lower in a general case, especially for large redundant network topology implementing a large number of packet gateways.

In view of the above, the present invention requires only a low network management complexity without any additional signaling overhead. In particular, the application of the present invention is not requiring a strict alignment of network resources to packet gateway traffic. Further, it is not application specific so that it may be applied for a large range of applications and packet gateways handling applications, e.g., media gateways in fixed, mobile or VoIP telephony networks and/or media gateways handling QoS sensitive packet switched sessions like GPRS support nodes in GSM/UMTS networks.

Overall, this is achieved by a coordinated configuration of edge routes and packet gateways, wherein traffic conditioning is achieved at the edge routers in view of a call admission control processing executed at the packet gateway. It is the use of information provided by a service differentiation field of packet headers which allows for the use of traffic classification and traffic conditioning elements in edge routers supporting admission control in attached packet gateways.

According to another preferred embodiment of the present invention there is provided a computer program product directly loadable into the internal memory of a packet gateway or an edge router comprising software code portions for performing the inventive admission control or service differentiation remarking process when the product is run on a processor of the packet gateway or the edge router.

Therefore, the present invention is also provided to achieve an implementation of the inventive method steps on computer or processor systems. In conclusion, such implementation leads to the provision of computer program products for use with a computer system or more specifically a processor comprised in, e.g., a packet gateway or an edge router.

This programs defining the functions of the present invention can be delivered to a computer/processor in many forms, including, but not limited to information permanently stored on non-writable storage media, e.g., read only memory devices such as ROM or CD ROM discs readable by processors or computer I/O attachments; information stored on writable storage media, i.e. floppy discs and harddrives; or information convey to a computer/processor through communication media such as network and/or Internet and/or telephone networks via modems or other interface devices. It should be understood that such media, when carrying processor readable instructions implementing the inventive concept represent alternate embodiments of the present invention.

### DESCRIPTION OF DRAWING

In the following, preferred embodiments of the present invention will be explained with reference to the drawing in which:
- Fig. 1: shows a basic concept underlying the present invention;
- Fig. 2: shows a schematic diagram of an edge router and a packet gateway according to the present invention;
- Fig. 3: shows a flowchart of operation of the edge router and the packet gateway according to the present invention;
- Fig. 4: shows a more detailed schematic diagram of the packet gateway according to the present invention;
- Fig. 5: shows a more detailed flowchart of operation of the packet gateway according to the present invention;
- Fig. 6: shows a more detailed schematic diagram of edge router according to the present invention;
- Fig. 7: shows a more detailed flowchart of operation of the edge router according to the present invention; and
- Fig. 8: shows possible options of traffic conditioning according to the present invention.

### DESCRIPTION OF BEST MODE AND PREFERRED EMBODIMENTS

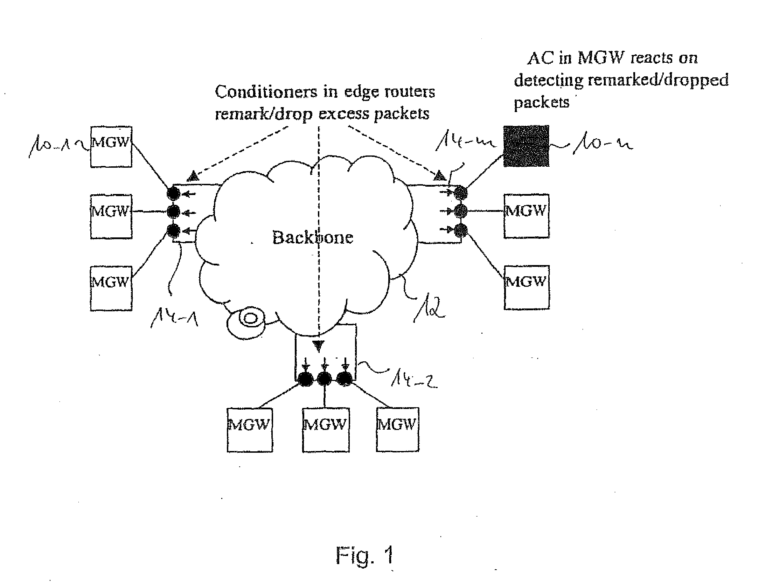

In the following, a best mode of the present invention and related preferred embodiments thereof will be described with reference to Fig. 1 to Fig. 8.

Insofar as in the following reference is made to the term packet gateway, either as destination or source packet gateway, it should be noted that this term is to be understood as covering any networking node handling a plurality of packet data flows in parallel, e.g., media gateways, SGSN networking nodes, GGSN networking nodes, etc.

Also, insofar as reference is made to the term 'service differentiation code point', this term is to be construed as covering any type of data packet switching protocol which supports service differentiation, e.g., according to S Blake et al.: An Architecture for Differentiated Services, RFC 2475.

Further, as alternative to service differentiation, another option to differentiate between different service levels would be to use different precedence bits, e.g., according to IP protocol. Yet another alternative would be the application of ATM related standards in support of service differentiation.

Fig. 1 shows a basic concept underlying the present invention.

As shown in Fig. 1, according to the present invention, it is assumed that a plurality of packet gateways 10-1 to 10-n are connected to a backbone network 12 by a plurality of edge routers 14-1 to 14-m.

As shown in Fig. 1, the present invention relates presentation of a session/call admission control method which is tailored to the needs of the packet gateways 10-1 to 10-n and overcomes the drawback discussed with respect to the prior art.

As shown in Fig. 1, the present invention relates to two different components, i.e. a new method of call admission control in the packet gateways 10-1 to 10-n and a specific traffic classification and traffic conditioning in the edge routers 14-1 to 14-m.

In particular, in the edge routers 14-1 to 14-m supporting the packet gateways 10-1 to 10-n data packet streams are filtered according to, e.g., certain traffic types to/from specific packet gateways or pre-set packet gateways and then remarked, should the related data packet stream not conform to a pre-configured traffic profile set at the edge router 14-1 to 14-m.

Therefore, the remarking at the edge router 14-1 to 14-m represents to the packet gateways 10-1 to 10-n a performance indicator for use within the call admission control at the packet gateway 10-1 to 10-n. In more detail, according to the present invention, it is suggested to use the grade of remarking executed at the edge routers 14-1 to 14-m for related measurement thereof at the packet gateway 10-1 to 10-n.

It should be noted that according to the present invention this performance indication is achieved without any signalling going on between edge routers and packet gateways.

Should the degree of measured remarking fulfil certain conditions, which may be specified in terms of a functional relation, e.g., at the maximum degree of remarking and a related threshold comparison, then the call admission control mechanism according to the present invention will deny set-up of a data packet stream accordingly. One option would be that in the data packet headers at least two different service differentiation codes are set for indication of a remarking at the edge router.

In other words, in the most general sense according to the present invention, it is suggested that data packets forwarded to destination packet gateways 10-1 to 10-n carry either a first service differentiation field indicating conformity with the predetermined traffic profile for data exchange between the destination packet gateway and the source packet gateway or a second service differentiation field indicating non-conformity with the predetermined traffic profile set for data exchange. Due to the change of service code points in the data packets, the packet gateway 10-1 to 10-n may then react on a detection of remarked data packets accordingly.

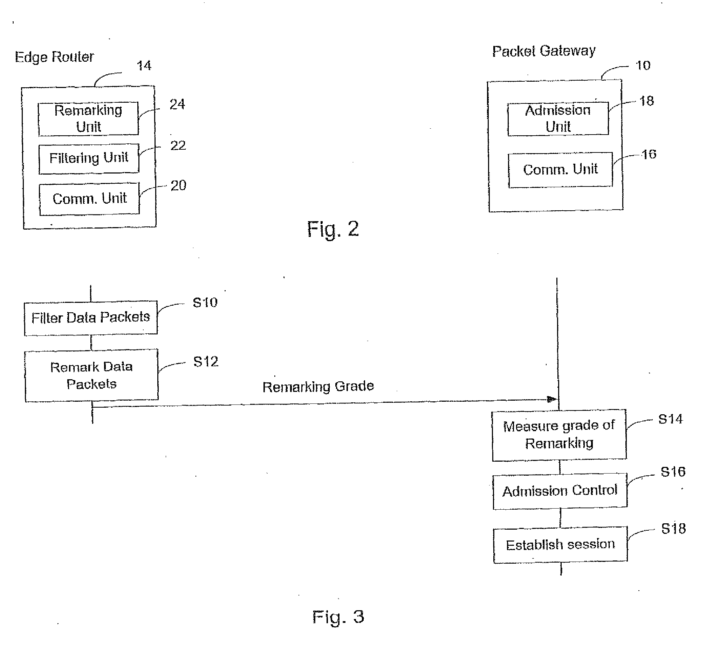

Fig. 2 shows a schematic diagram of the edge router 14 and the packet gateway 10 shown in Fig. 1, respectively.

As shown in Fig. 2, the packet gateway 10 comprises a communication unit 16 for exchange of data packets, a request for a data stream set-up, or any other type of information exchange with the packet gateway 10. Further, the packet gateway 10 comprises an admission unit 18 executing the functions of the admission control unit, as outlined above.

As shown in Fig. 2, the edge router 14 comprises a communication unit 20 for exchange of data either with the packet gateway or the backbone network, a filtering unit 22 for filtering data streams according to predefined criteria, and a remarking unit 24 adapted to remark data packets identified through the filtering unit 22.

Fig. 3 shows a flow chart of operation for the packet gateway 10 and the edge router 14 shown in Fig. 2, respectively.

As shown in Fig. 3, for the operation of the edge router 14 it is assumed that data packets carry field classification identifying a related data packet stream source, a data packet stream destination, and a service differentiation code.

As shown in Fig. 3, the filtering unit 22 of the edge router 14 will filter data packet streams according to data packet source, data packet stream destination, and a related service differentiation code in a step S10.

As shown in Fig. 3, in a step S12, the remarking unit 24 of the edge router 14 will execute a remarking of the service differentiation code of data packets. This is done for performance indication to the packet gateway 10 when selected data packet streams are not conforming with a pre-configured traffic profile.

In particular, the remarking unit 24 will remark the data packets in the step S12, such that remarking is achieved in a first service differentiation code indicating conformity with a predetermined traffic profile set for data exchange between a destination packet gateway and a source packet gateway to a second service differentiation field indicating non-conformity with the predetermined traffic profile.

As shown in Fig. 3, after processing of a data packet stream at the edge router 14, then the packet gateway 10 will execute a measuring of the number of data packets handled by the packet gateway and having remarked the service differentiation field in a measurement step S14.

As shown in Fig. 3, then follows an admission control step S16 in view of a request for set-up of a data packet stream. The request will be admitted at the step S16 when the number of measured data packets with remarked service differentiation field fulfils predefined criteria.

Generally, the admission control may be executed as any function of the measured number of data packets with remarked service differentiation code, e.g., a threshold comparison of the measured number of remarked data packets with a predetermined threshold.

Typically, without restricting the scope of the present invention, such a threshold may be expressed as percentage of the data traffic, e.g., in the range of 20%, 10%, or a couple percents of the total traffic. An alternative to a threshold comparison would be to progressively decrease the admission rate with increase of a remarking rate at the edge router 14.

As shown in Fig. 3, irrespective of the specific type of admission control allowed for at the packet gateway 10, a positive result of the admission control will then be followed by a step S18 for establishment of a data packet stream towards the packet gateway 10. Otherwise, in case of a rejection of a set-up of a data packet stream in step S16, the step S18 will not be executed.

To explain one example of the application of the present invention outlined so far with respect to Figs. 1 to 3, one may assume that the packet gateway handles only one type of traffic, e.g., voice calls. In this case, the traffic condition executed at the edge router 14 may be performed on the total traffic at the egress interface of the edge router 14 towards the packet gateway 10 so that a classification of the data packet stream is not needed.

Further, for this case a related traffic profile may be related to a bandwidth limit which is set according to a dimensioned transport capacity towards the attached packet gateway 10. Here, if the data packet stream traffic exceeds the configured bandwidth limit then the remarking unit 24 at the edge router remarks the service differentiation code, e.g., a DiffServ code point DSCP according to IP, of the exact data stream traffic.

Then, in the packet gateway it is checked whether the number of remarked data packets exceeds a session admission control threshold in the directly connected packet gateway 10, which would then block the admission set-up of a new data stream session. This allows to limit the total traffic towards the packet gateway 10.

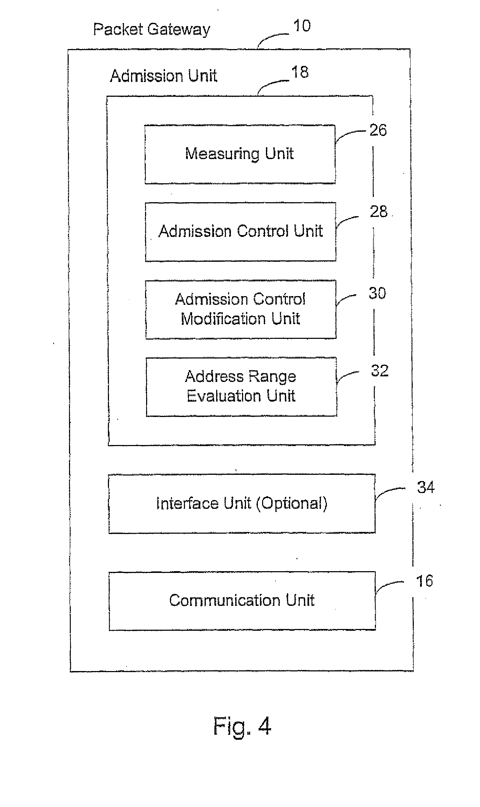

In the following, more details of the present invention and related functionality will be explained with respect to Figs. 4 to 8.

Fig. 4 shows a further detailed schematic diagram of the packet gateway 10 shown in Fig. 2.

As shown in Fig. 4, the admission unit 18 shown in Fig. 2 comprises a measuring unit 26, an admission control unit 28, an admission control modifying unit 30, and an address range evaluation unit 32. Further, optionally, the packet gateway 10 may comprise an interface unit 34 for exchange of configuration data with the edge router 14.

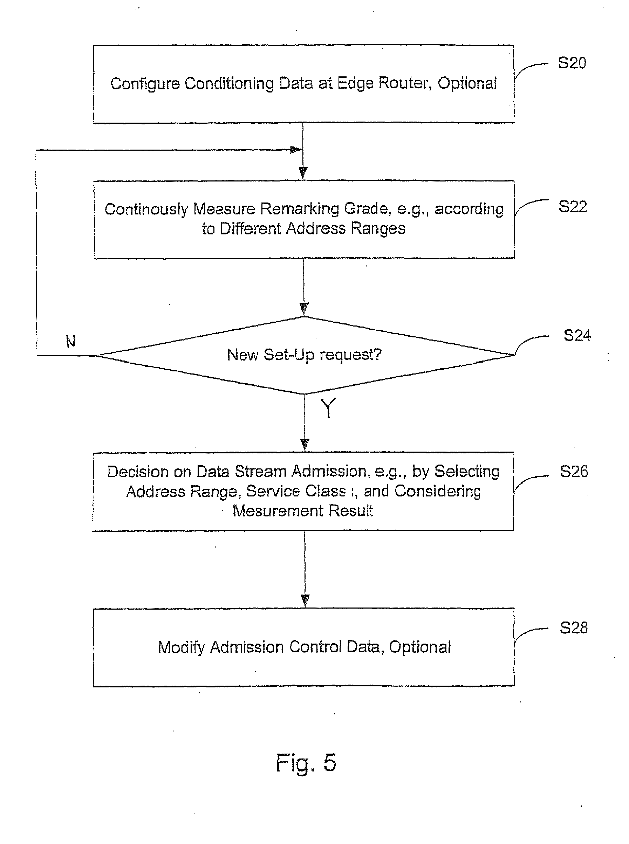

Fig. 5 shows a flowchart of operation of the packet gateway 10 shown in Fig. 4.

As shown in Fig. 5, in a step S20 the interface unit 34 of the packet gateway 10 may be activated for forwarding of configuration data to edge routers 14 forwarding data packet streams to the packet gateway 10. Typical examples of such configuration data for set-up of traffic conditioning at the edge router 14 could be which servers differentiation codes may be remarked to which further service differentiation codes and which number of remarked data packets the packet gateway 10 will block new requests for data packet stream set-up. Alternatively, the configuration of edge routers 14 may be executed through manual input the edge router 14.

As shown in Fig. 5, according to a step S22 the measuring unit will continuously measure a remarking grade as the number of data packets arriving at the packet gateway and hiving service differentiation code remarked through edge routers. It should be noted that according to the present invention such measurement may be achieved in a specific way for specific address ranges.

In other words, according to the present invention the measurement of remarking grade may be executed according to specific address ranges, e.g., for source packet gateways, a group of source packet gateways, or as abstract address range as such, which may be achieved by the address range evaluation unit 32 shown in Fig. 4.

As shown in Fig. 5, besides the continuous measurement of the remarking grade in step S22, also a step S24 is executed by the admission control unit 28 to continuously interrogate submission of a request for set-up of a data packet stream to the packet gateway 10.

As shown in Fig. 5, in case of a negative interrogation at step S24, the flow of operation will branch back to step S22 for repeated measurement of the remarking grade. Otherwise, the procedure proceeds to step S26 for execution of admission control by the admission control unit 28.

As shown in Fig. 5, after measurement of the remarking grade in a step S24, then in a step S26 the admission control unit 28 will decide on a data packet stream set-up as a function of the measurement result.

It should be noted that admission control according to the present invention may imply selection of an address range for which admission control is executed, further selection of a service class for which admission control is executed, and considering the remarking grade for the address range and service class in view of pre-determined admission criteria.

As shown in Fig. 5, optionally in a step S28 the admission control modifying unit 30 of the gateway packet 10 may modify the criteria for set-up of a data packet stream to the packet gateway 10.

Here, one option would be to change the allowability of data packet stream set-up through modification of a threshold used during a threshold comparison in view of the state of the backbone transport network. Also, to prevent performance degradation at the edge router it might be possible to consider the dropping rate at the edge router during call admission control at the packet gateway 10, such that with increase of dropping rate at the edge router 14 the barrier for admission control at the packet gateway will get higher and higher.

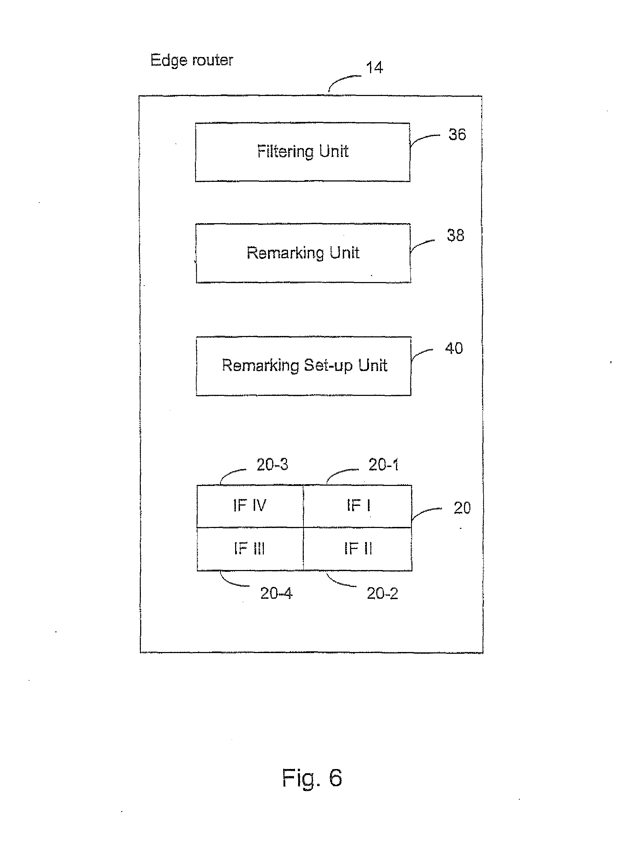

Fig. 6 shows a further detailed schematic diagram of the edge router 14 shown in Fig. 2.

As shown in Fig. 6, the edge router 14 comprises a filtering unit 36, a remarking unit 38, a remarking set-up unit 40, and the communication unit 20 shown in Fig. 2.

The interface unit divides into a first interface unit 20-1 receiving data packet streams from the packet gateway 10, a second interface unit 20-2 forwarding data packet streams to a packet gateway 10, a third interface unit 20-3 forwarding data stream packets to the backbone network 12, and a fourth interface unit 20-4 receiving data stream packets from the backbone network 12.

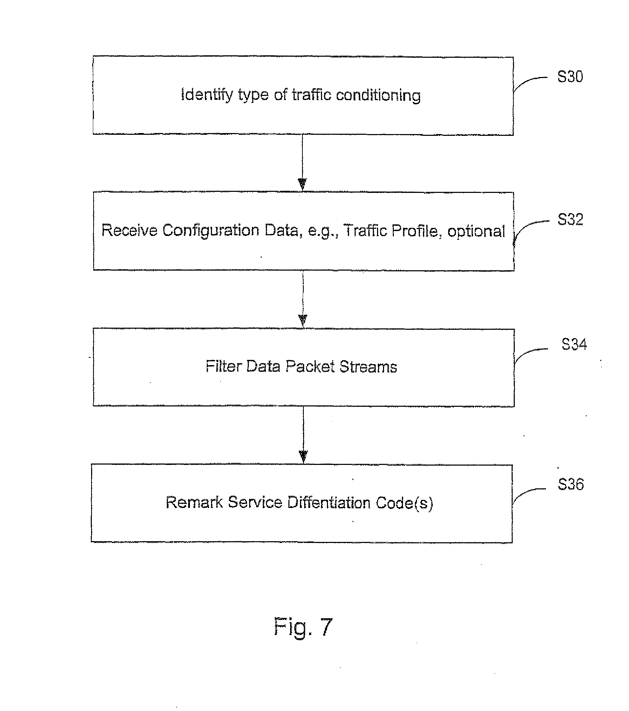

Fig. 7 shows a flowchart operation for the edge router 14 shown in Fig. 6.

As shown in Fig. 7, operatively the filtering unit 36 will identify the type of required traffic conditioning in a step S30. Optionally, the filtering unit 36 may receive configuration data, e.g., a traffic profile indicating available bandwidth for one or more packet gateways 10, leaky bucket size, etc., in a step S32. The configuration data may as one typical example be received from the packet gateway 10 or may be configured manually at the edge router 14.

In more detail, the performance capability data determines transport capabilities towards the packet gateway 10. Further, the configuration data may indicate at least one mapping from a service differentiation code to a second service differentiation code which information is processed by the remarking set-up unit 40 shown in Fig. 6.

As shown in Fig. 7, subsequent to step S32 there follows a step S34 executed by the filtering unit 36 shown in Fig. 6 to filter data packet streams at the edge router 14. Here, the filtering step S 34 is executed according to a predetermined traffic profile, e.g., like selection of packets based on specific source address(es) or destination address(es) or even address range(s), distinguishing between traffic streams coming from different sites, which may be one specific source packet gateway or a group of source packet gateways, available bandwidth for data packet exchange, etc.,

As shown in Fig. 7, following the step S34 the remarking unit 38 will execute a remarking, e.g., from a first service differentiation code to a second service differentiation code should the filtering step S 234 indicate non-compliance with the pre-determined traffic profile.

Further, it should be noted that at the packet gateway 10 one may, in addition to the filtering and remarking steps executed at the edge router 14, identify a dropping rate through analysis of sequence numbers for additional consideration of the dropping rate during session admission control. The advantage is an extension of the session admission control in reaction to a detected packet dropping rate besides consideration of remarking of data stream packets. For this reason, according to the present invention, one may incorporate the functionality of two criteria for common admission control set to have the ability to react on unexpected backbone networking conditions.

Further, for the filtering step S34 explained above one may consider a flexibility in defining the place of traffic conditioners and related filtering mechanisms in view of various types of backbone networks.

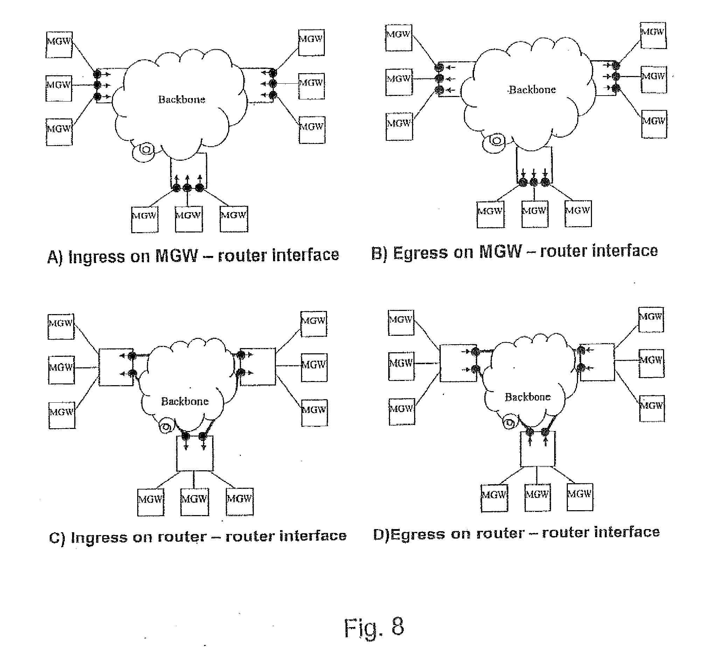

Fig. 8 shows further details of possible places of traffic conditioning and filtering according to the present invention.

As shown in Fig. 8, a first possibility relates to providing the inventive method of operating edge router at the first router interface 20-1 receiving session packet streams from at least one destination packet gateway 10.

In this case indicated with A in Fig. 8, there is considered Ingress on the packet gateway-router interface. Heretofore, different options exist as follows:
- *Packet gateway-to-packet gateway trunk provisioning*: This can be achieved by separate traffic conditioners for the data stream packet towards each remote packet gateway and for admission control in packet gateways working on a per-client-node aggregation level.
- *Packet gateway-to-backbone hose provisioning*: Filtering and traffic conditioning is configured for the traffic to non-local addresses and measurement-based access control is executed on a per-packet gateway aggregation level. Contrary to static packet gateway admission control, here the hose limitations are accomplished by the measurement-based access control on the remote packet gateways.
- *Packet gateway-to-domain, e.g., site provisioning*: Filtering and traffic conditioning is configured separately for the traffic to prefix(es) represented by the packet gateway in different domains, and admission control works on a per-packet gateway aggregation level.

A second case indicated with B in Fig. 8 relates to Egress on a packet gateway-router interface, i.e. to the interface 20-2 shown in Fig. 6.

A further case C relates to the application of the filtering process at a third interface 20-3 shown in Fig. 6, i.e. ingress on router-router interface being related to traffic from the backbone network 12. Here, at least three different options exist:
- *Site-to-site trunk provisioning*: Here, classifiers filter according to addresses in the source and destination sites, wherein a site is considered as the plurality of packet gateways aggregated into a site facility and admission control works on a per-site aggregation level.
- *Site-to-backbone hose provisioning*: Here, classification is executed based on destination addresses of the given site and admission control aggregates all non-local traffic of data packet streams.
- *Site-to-domain provisioning*: Here, filtering and related classification of data packet streams is achieved according to source addresses in different domains, and admission control works on a per-domain aggregation level.
   As shown in Fig. 8, a last option of placing the filtering and remarking method according to the present invention within the edge router is related to a fourth interface 20-4, i.e. with respect to egress on router-router interface or, in other words, with respect to data stream traffic to the backbone network 12.

In view of the above, traffic conditioning on a router-router interface, cases C and D shown in Fig. 8, allows for the definition of site-to-site trunks for trunk provisioning in contrast to policing and traffic configuration on a packet gateway-router interface, cases A and B in Fig. 8, where the limitations always refer to a given packet gateway.

On the other hand, if traffic is configured at a router-router interface then a more complex address filtering is needed in the edge routers because transit traffic and traffic on other classes should be filtered out from the traffic generated at a given site.

If traffic condition is configured at the ingress to the backbone, cases A and D, and the drop of the packets is above certain bandwidth limits, then the solutions also provide a protection against flooding the backbone network with traffic in case of faults, All other solutions would have to include further traffic conditioners for limiting the total traffic into the backbone network's work. i.e., the traffic conditioners supporting admission control in the packet gateways may not always take the role of the traffic conditioners specified, e.g., in the DiffServ architecture, S. Blake et al.: An Architecture for Differentiated Services, RFC 2475.

Further, it should be noted that the present invention also allows for a site aggregation of packet gateways at customer edge(s).

In particular, site aggregation is a useful practical realization of traffic conditioning supporting the admission control according to the present invention, when it is configured at customer edge routers or layer-2 switches aggregating the traffic from/to the packet gateway(s) within a site.

The site aggregation solution has advantages as follows:

It allows for a more bandwidth-efficient transport trunk provision similar to the case of conditioning on router-router interfaces, but it also reduces the complexity of filter configurations as well as the management burden for the scenarios with traffic conditioning on the packet gateway-filter interfaces.

Further, as both remarking and admission control is executed within the customer premises, the site conditioning may be regarded as a standard-compliant solution, irrespective of which standard would be actually be applied, and it is applicable with a DiffServ-compliant backbone, as long as the client notes and the aggregating router/switch at the site support this functionality.

Further, preferred embodiments helpful for understanding the present invention are:
Embodiment 1: Method of admission control with respect to a request for set-up of a data packet stream between a destination packet gateway and a source packet gateway, wherein data packets forwarded to the destination packet gateway carry a first service differentiation field indicating conformity with a predetermined traffic profile for data exchange between the destination packet gateway and the source packet gateway and a second service differentiation field indicating non-conformity with the predetermined traffic profile set for data exchange between the destination packet gateway and the source packet gateway, comprising the steps: - measuring the number of data packets handled by the destination packet gateway and having remarked the second service differentiation field; and - admitting the set-up of a data packet stream at the destination packet gateway as a function of the number of remarked data packets.
Embodiment 2: Method according to Embodiment 1, ***characterized in that*** it comprises the steps: - comparing the measured number with a pre-determined threshold; and - admitting the set-up of a data packet stream at the destination packet gateway when the measured number is lower than the pre-determined threshold.
Embodiment 3: Method according to Embodiments 1 or 2, ***characterized in that*** it further comprises a step of forwarding remarking configuration data to an edge router exchanging data packets with the destination packet gateway.
Embodiment 4: Method according to Embodiment 3, ***characterized in that*** the step of forwarding remarking configuration data forwards data determining an allowable remarking of service differentiation fields of data packets in a session packet stream before forwarding thereof to the destination packet gateway.
Embodiment 5: Method according to one of the Embodiments 1 to 4, ***characterized in that*** it further comprises a step of preventing performance degradation at an edge router supporting the destination packet gateway during exchange of session packet streams.
Embodiment 6: Method according to Embodiment 5, ***characterized in that*** performance degradation is related to data packet dropping at the edge router supporting the destination packet gateway during exchange of session packet streams.
Embodiment 7: Method according to Embodiment 5 or 6, ***characterized in that*** the step of reacting to performance degradation at the edge router comprises an adaptation of the threshold set for comparison the measured number of data packets handled by the destination packet gateway and having set the second service differentiation field.
Embodiment 8: Method according to one of the Embodiments 1 to 7, ***characterized in that*** it further comprises the step of considering the source packet gateways for different session packet streams.
Embodiment 9: Method according to Embodiment 8, ***characterized in that*** the step of considering the source packet gateways for different session packet streams is executed for a group of source packet gateways.
Embodiment 10: Method according to Embodiment 8, ***characterized in that*** the step of considering the source packet gateways for different session packet streams is executed for a single source packet gateway.
Embodiment 11: Method according to Embodiment 8, ***characterized in that*** the step of considering the source packet gateways for different session packet streams is executed according to a range of destination addresses.
Embodiment 12: Method according to one of the Embodiments 1 to 11, ***characterized in that*** session packet streams are exchanged using an IP protocol.
Embodiment 13: Method according to Embodiment 12, ***characterized in that*** service differentiation fields are indicated by use of a differentiated services code point information (DSCP).
Embodiment 14: Method according to Embodiment 13, ***characterized in that*** service differentiation fields are indicated by use of precedence bits according to the IP protocol.
Embodiment 15: Packet gateway adapted to execute an admission control with respect to a request for set-up of a data packet stream between the packet gateway and a remote packet gateway, wherein data packets forwarded to the packet gateway carry a first service differentiation field indicating conformity with a predetermined traffic profile for data exchange between the packet gateway and the remote packet gateway and a second service differentiation field indicating non-conformity with the predetermined traffic profile set for data exchange between the packet gateway and the remote packet gateway, comprising: - a measuring unit adapted to measure the number of data packets handled by the destination packet gateway and having set the second service differentiation field; and - an admission unit adapted to admit the set-up of the data packet stream at the packet gateway as a function of the number of remarked data packets.
Embodiment 16: Packet gateway according to Embodiment 15, ***characterized in that*** the admission unit comprises: - a comparison unit adapted to compare the measured number with a pre-determined threshold; and - an admission control unit adapted to admit the set-up of a data packet stream at the packet gateway when the measured number is lower than the pre-determined threshold.
Embodiment 17: Packet gateway according to Embodiment 15 or *16, **characterized in that** it* further comprises an interface unit adapted to forward remarking configuration data to an edge router supporting the packet gateway during exchange of session packet streams.
Embodiment 18: Packet gateway according to Embodiment 17, ***characterized in that*** the interface unit is adapted to forward remarking configuration data as data determining an allowable remarking of service differentiation fields of data packets in a session packet stream before forwarding thereof to the packet gateway.
Embodiment 19: Packet gateway according to one of the Embodiments 15 to 18, ***characterized in that*** it further comprises an admission control modification unit adapted to prevent performance degradation at an edge router supporting the packet gateway during exchange of session packet streams.
Embodiment 20: Packet gateway according to Embodiment 19, ***characterized in that*** performance degradation is related to data packet dropping at the edge router supporting the destination packet gateway during exchange of session packet streams with a packet switched access network.
Embodiment 21: Packet gateway according to Embodiment 19 or *20, **characterized in that*** the admission control modification unit is adapted to react to performance degradation at the edge router through an adaptation of the threshold set for comparison of the number of data packets handled by the packet gateway and having the second service differentiation field set.
Embodiment 22: Packet gateway according to one of the Embodiments 15 to 21, ***characterized in that*** it further comprises an address range evaluation unit adapted to consider remote packet gateways with respect to different session packet streams.
Embodiment 23: Packet gateway according to Embodiment 22, ***characterized in that*** the address range evaluation unit is adapted to consider the remote packet gateways for different session packet streams with respect to a group of remote packet gateways.
Embodiment 24: Packet gateway according to Embodiment 22, ***characterized in that*** the address range evaluation unit is adapted to considering the remote packet gateways for different session packet streams with respect to a single source packet gateway.
Embodiment 25: Packet gateway according to Embodiment 22, ***characterized in that*** the address range evaluation unit is adapted to consider the remote packet gateways for different session packet streams with respect to a range of packet gateway destination addresses.
Embodiment 26: Packet gateway according to one of the Embodiments 15 to 25, ***characterized in that*** it comprises a communication unit adapted to exchange session packet streams using an IP protocol.
Embodiment 27: Packet gateway according to Embodiment 26, ***characterized in that*** service differentiation fields are indicated through a differentiated services code point information (DSCP).
Embodiment 28: Packet gateway according to Embodiment 27, ***characterized in that*** service differentiation fields are indicated through precedence bits according to the IP protocol.
Embodiment 29: A computer program product directly loadable into the internal memory of a packet gateway comprising software code portions for performing the steps of one of the Embodiments 1 to 14 when the product is run on a processor of the packet gateway.

## Claims

1. Method of operating an edge router processing data packet streams exchanged between at least one destination packet gateway and at least one source packet gateway, wherein data packets carry a field classification identifying at least a related data packet stream source, a data packet stream destination, and a service differentiation code, comprising the steps:
- filtering data packet streams according to data packet stream source, data packet stream destination, and service differentiation code;
- remarking the service differentiation code of data packets for performance indication to the destination packet gateway when selected data packet streams are not conforming to a pre-configured traffic profile, wherein
- remarking is achieved from a first service differentiation code indicating conformity with a predetermined traffic profile set for data exchange between the destination packet gateway and the source packet gateway to a second service differentiation field indicating non-conformity with the predetermined traffic profile;
- performance indication to the destination packet gateway is achieved without any additional signalling between the edge router and the destination gateway, wherein
- the remarking step is prepared through receipt of traffic profile indicating performance capability data from the destination packet gateway.

2. Method according to claim 1, ***characterized in that*** the performance capability data determines transport capabilities towards the destination packet gateway.

3. Method according to claim 1 or 2, ***characterized in that*** the performance capability data determines at least one new service differentiation code available for remarking of data packets.

4. Method according to one of the claims 1 to 3, ***characterized in that*** it is operated at a first router interface of the edge router receiving session packet streams from at least one destination packet gateway.

5. Method according to claim 4, ***characterized in that*** it is applied to a point-to-point aggregate from a destination packet gateway to a source packet gateway.

6. Method according to claim 4, ***characterized in that*** it is applied to a point-to-multi-point aggregate from a destination packet gateway to at least two source packet gateways.

7. Method according to claim 4, ***characterized in that*** it is applied to a point-to-domain aggregate from a destination packet gateway to at least two source packet gateways, wherein source packet gateways are arranged into a domain group.

8. Method according to one of the claims 1 to 3, ***characterized in that*** it is operated at a second router interface of the edge router forwarding a session packet stream to at least one destination packet gateway.

9. Method according to one of the claims 1 to 3, ***characterized in that*** it is operated at a third router interface of the edge router receiving a session packet stream from a packet switched access network which is directed to at least one destination packet gateway, wherein the at least one destination packet gateway is arranged into a destination site.

10. Method according to claim 9, ***characterized in that*** it is applied to a destination site-to-source site scenario one the basis of address ranges identifying the destination site and source site, wherein the source site comprises at least one source packet gateway.

11. Method according to claim 9, ***characterized in that*** it is applied to a destination site-to-packet switched network scenario on the basis of an address range identifying the destination site.

12. Method according to claim 9, ***characterized in that*** it is applied to a destination site-to-source domain scenario on the basis of address ranges identifying the destination site and source domain.

13. Method according to one of the claims 1 to 3, ***characterized in that*** it is applied at a fourth router interface forwarding a session packet stream to the packet switched access network connecting the source packet gateway and the destination packet gateway.

14. Method according to one of the claims 1 to 13, ***characterized in that*** the edge router is operated on the basis of the IP protocol.

15. Method according to claim 14, ***characterized in that*** service differentiation codes are differentiated services code points (DSCP).

16. Method according to claim 14, ***characterized in that*** service differentiation codes are precedence bits.

17. Edge router for processing of data packet streams exchanged between at least one destination packet gateway and at least one source packet gateway, wherein data packets carry a field classification identifying at least a related data packet stream source, a data packet stream destination, and a service differentiation code, comprising:
- a filtering unit adapted to filter data packet streams according to data packet stream source, data packet stream destination, and service differentiation code; and
- a remarking set-up unit adapted to prepare a remarking step through receipt of traffic profile indicating performance capability data from the destination packet gateway;
- a remarking unit adapted to remark the service differentiation code of data packets for performance indication to the destination packet gateway when selected data packet streams are not conforming to a pre-configured traffic profile, wherein
- the remarking unit is adapted to remark a first service differentiation code indicating conformity with a predetermined traffic profile set for data exchange between the destination packet gateway and the source packet gateway into a second service differentiation field indicating non-conformity with the predetermined traffic profile;
- performance indication to the destination packet gateway is achieved without any additional signalling between the edge router and the destination gateway.

18. Edge router according to claim 17, ***characterized in that*** the performance capability data determines transport capabilities towards the destination packet gateway.

19. Edge router according to claim 17 or 18, ***characterized in that*** the performance capability data determines at least one new service differentiation code available for remarking of data packets in the remarking unit.

20. Edge router according to one of the claims 17 to 19, ***characterized in that*** it comprises a first router interface receiving session packet streams from at least one destination packet gateway.

21. Edge router according to claim 20, ***characterized in that*** the first router interface it adapted to operate on a point-to-point aggregate from a destination packet gateway to a source packet gateway.

22. Edge router according to claim 20, ***characterized in that* that** the first router interface it adapted to operate on a point-to-multi-point aggregate from a destination packet gateway to at least two source packet gateways.

23. Edge router according to claim 20, ***characterized in that*** the first router interface is adapted to operate on a point-to-domain aggregate from a destination packet gateway to at least two source packet gateway, wherein source clients nodes are arranged into a domain group.

24. Edge router according to one of the claims 17 to 19, ***characterized in that*** it comprises a second router interface adapted to forward a session packet stream to at least one destination packet gateway.

25. Edge router according to one of the claims 17 to 19, ***characterized in that*** it comprises a third router interface adapted to receive a session packet stream from a packet switched access network which is directed to at least one destination packet gateway, wherein the at least one destination packet gateway is arranged into a destination site.

26. Edge router according to claim 25, ***characterized in that*** the third interface unit is adapted to handle a destination site-to-source site scenario one the basis of address ranges identifying the destination site and source site, wherein the source site comprises at least one source packet gateway.

27. Edge router according to claim 25, ***characterized in that*** the third interface unit is adapted to handle a destination site-to-packet switched network scenario one the basis of an address range identifying the destination site.

28. Edge router according to claim 25, ***characterized in that*** the third interface unit is adapted to handle a destination site-to-source domain scenario one the basis of address ranges identifying the destination site and source domain.

29. Edge router according to one of the claims 17 to 19, ***characterized in that*** it comprises a fourth router interface adapted to forward a session packet stream to the packet switched access network connecting the source packet gateway and the destination packet gateway.

30. Edge router according to one of the claims 17 to 29, ***characterized in that*** the edge router is operated on the basis of the IP protocol.

31. Edge router according to claim 30, ***characterized in that*** service differentiation codes are differentiated services code points (DSCP).

32. Edge router according to claim 30, ***characterized in that*** service differentiation codes are precedence bits.

33. A computer program product directly loadable into the internal memory of an edge router comprising software code portions for performing the steps of one of the claims 1 to 16 when the product is run on a processor of the edge router.
